(19) Europäisches Patentamt
European Patent Office
Office européen des brevets

(11) Publication number: 0 419 741 B1

# (12) EUROPEAN PATENT SPECIFICATION

(45) Date of publication of patent specification: 29.11.95 (51) Int. Cl.6: C08G 16/00, C08J 5/10

(21) Application number: 89309862.4

(22) Date of filing: 28.09.89

The file contains technical information submitted after the application was filed and not included in this specification

## (54) Rubber compounding resin.

(43) Date of publication of application:
03.04.91 Bulletin 91/14

(45) Publication of the grant of the patent:
29.11.95 Bulletin 95/48

(84) Designated Contracting States:
AT BE CH DE ES FR GB IT LI NL SE

(56) References cited:
EP-A- 0 056 156
DE-A- 2 150 216
DE-A- 2 411 297
GB-A- 1 204 519
DE-A- 689 600
DE-A- 2 330 850
GB-A- 1 131 163
US-A- 2 602 076

(73) Proprietor: INDSPEC CHEMICAL CORPORATION
Chamber of Commerce Building
411 Seventh Avenue
Pittsburgh, PA 15219 (US)

(72) Inventor: Hood, Richard T
5361 Margaretta Drive
Murrysville
Pennsylvania 15668 (US)
Inventor: Lamars, Robert M
327 East Bruceton Road
Pittsburgh
Pennsylvania 15236 (US)

(74) Representative: Bull, Michael Alan et al
Haseltine Lake & Co.
Hazlitt House
28 Southampton Buildings
Chancery Lane
London WC2A 1AT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to phenolic resins which are used in forming adhesives and, in particular, to resorcinol-aldehyde resins which are used with curing agents in rubber to give improved tyre cord-to-rubber adhesion.

Resorcinol-aldehyde resins of the novolak type are used as bonding agents in rubber to promote adhesion of steel cord to the rubber. The known resins generally have 10% to 20% unreacted resorcinol and produce objectionable fuming when added to the rubber. Also, the resins are hygroscopic and may present a problem in storage and handling. Efforts to improve these resins by increasing the charge of formaldehyde to react with more of the resorcinol have not generally been successful: it has been found that whilst there is a lowering of the amount of unreacted resorcinol, the softening point of the resin becomes too high to allow compounding with rubber. It is, therefore, an object of the invention to provide a phenolic resin of the novolak type that is low fuming, nonhygroscopic, low in free resorcinol and capable of cross-linkage with curing agents in rubber to give improved cord-to-rubber adhesion.

In GB-A-1204519 there is disclosed a process for the manufacture of electrical grade laminates, in which a resol resin is used. The resol resin is formed from phenol, styrene or a styrene derivative and a molar excess of aldehyde. In DE OLS 2330850 there is disclosed a process for forming alkylarylphenol solutions from phenol and styrene or a styrene derivative, the solutions being used to prepare resol resins by reaction with a molar excess of formaldehyde. In DE OLS 2150216 there is disclosed a process for the preparation of resol resins in which phenol is reacted with styrene subsequent to which a molar excess of formaldehyde is added. In DE-A-689600 there is disclosed a reaction product of styrene and resorcinol. In GB-A-1131163 there are disclosed water-soluble resol resins made from a molar excess of formaldehyde and a Friedel-Crafts catalysed condensation product of phenol itself or a mixture of phenol with up to 20% cresol, and styrene or alkyl-substituted styrene. In DE OLS 2411297 there is disclosed a resol resin which is the reaction product of a molar excess of formaldehyde and a condensation product of phenol and styrene. In US-A-2602076 there is disclosed oil-soluble phenolic resol resins formed from a molar excess of formaldehyde and a condensation product of phenol and styrene.

According to a first aspect of the present invention there is provided a process for making a phenolic resin, for use in rubber compounding, which process comprises the steps of reacting a compound having the formula I

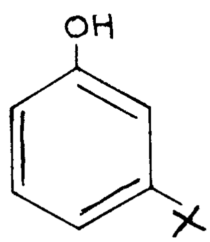

I

in which X is hydroxyl, hydrogen or an alkyl group having from 1 to 4 carbon atoms, with a compound having the formula II

$Y - CH = CH_2$    II

in which Y is phenyl, hydrogen or an aliphatic alkyl group having from 1 to 4 carbon atoms, and with a compound having the formula III

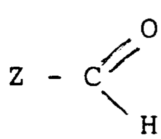

III

in which Z is hydrogen or an alkyl group having from 1 to 4 carbon atoms; and wherein the molar ratio of the compound of formula III to the compound of formula I is in the range of from 0.5 to 0.8 moles to 1.0 mole.

According to a second aspect of the present invention there is also provided a phenolic resin when made by the process of the invention. A preferred phenolic resin according to this aspect of the invention is one prepared by the process of the invention where in the compound of formula I X is hydrogen, in the compound of formula II Y is phenyl, and in the compound of formula III Z is hydrogen whereby the phenolic resin can be represented by formula IV

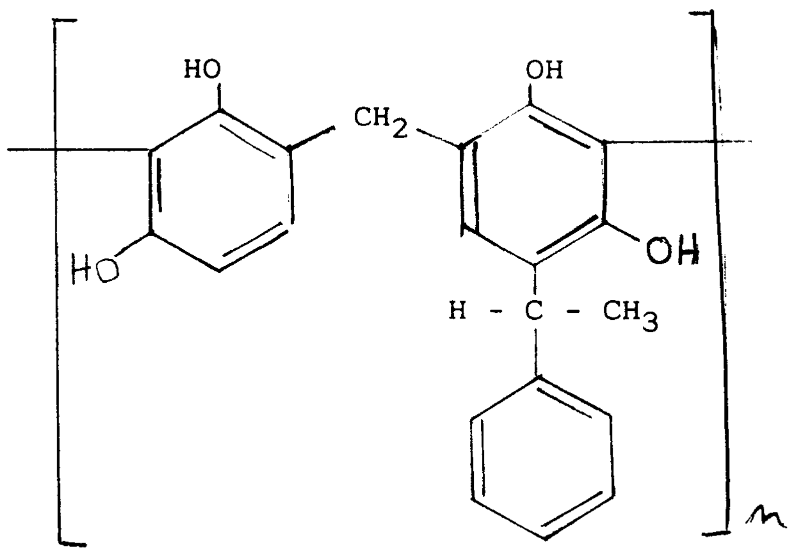

IV

According to another aspect of the present invention there is used in a rubber composition a phenolic resin according to invention and a curing agent therefor.

We have found that vinyl compounds and, in particular, styrene can be reacted either with (1) the resorcinol or other phenolic compounds prior to reaction with formaldehyde or other aldehydes, or (2) with the free resorcinol remaining after the resorcinol/phenol formaldehyde reaction is completed to give low fuming, nonhygroscopic resins containing from 0% to 5% free resorcinol. Surprisingly and unexpectedly, the softening point of the resin is not raised by the reaction with styrene, and the adhesion to steel cord properties compared to conventional resins remain high.

Phenolic resins have also been successfully prepared using stripped crude resorcinol and blends of resorcinol and resorcinol still bottoms, and the procedure is applicable for phenol-resorcinol formaldehyde type resins.

The compound of formula I is preferably resorcinol.

The compound of formula II is preferably styrene.

The compound of formula III is preferably formaldehyde.

The molar ratio of the compound of formula I to the compound of formula II is preferably approximately 1 mole to 0.25-1.0 mole.

The process may be carried out by (a) first reacting the compound of formula I with the compound of formula II and then (b) reacting the product of step (a) with a compound of formula III. Step (a) may be carried out at a temperature in the range of from 120 to 140 °C, and may be effected in the presence of an acid catalyst, e.g. p-toluene sulphonic acid. Step (b) may be carried out at a temperature in the range of from 110° to 130 °C. Resorcinol still residue and sodium hydroxide may be introduced in step (b).

Alternatively, the process may be carried out by (a) first reacting the compound of formula I with the compound of formula III and then (b) reacting the reaction product of step (a) with the compound of formula II. Step (a) may be carried out at a temperature in the range of from 100 to 120 °C. In step (b) dehydration at atmospheric pressure at a temperature in the range of from 130 to 150 °C may take place before the compound of formula II is added. Step (b) may subsequently be carried out at a temperature in the range of from 130 to 150 °C. Step (b) may be effected in the presence of an acid catalyst, e.g. p-toluene sulphonic acid. Resorcinol still residue and water may be introduced in step (a) and sodium hydroxide in step (b).

In one embodiment of the process of this invention, resorcinol and styrene are reacted at a molar ratio of 1 mole of resorcinol to 0.25 to 1.0 moles of styrene in the presence of an acid catalyst at 120 °C. Thereafter, formaldehyde is added at a molar ratio of 0.5 to 0.7 and reacted at 100 °C, after which the reaction product is dehydrated.

In another embodiment of the process of this invention, resorcinol and formaldehyde are reacted at a molar ratio of 1 mole of resorcinol to 0.5 to 0.7 moles of formaldehyde at 100 °C. The reaction product is then dehydrated at atmospheric pressure to 140 °C. Styrene at a molar ratio of 0.25 to 1.0 is then added to complete the reaction at 140 °-150 °C.

The invention is further described with reference to the attached drawings in which:

Figure 1 is a flow diagram which illustrates a process which is a preferred embodiment of the present invention.

Figure 2 is a flow diagram which illustrates a process which is an alternative embodiment of the present invention.

Referring to Figure 1, one way to make the resin of the present invention is first to charge a reactor with molten resorcinol and an acid catalyst. Suitable catalysts would include, but are not be limited to, p-toluene sulphonic acid, and phenol sulphonic acid, toluene sulphonic and benzene m-disulphonic acid. After 10 minutes of mixing the resorcinol and catalyst, styrene would then be added streamwise for a period of from ¾ to 1¾ hours while the temperature is at 120° to 140 °C. After all the styrene has been added, the temperature is maintained at 120° to 140 °C for ½ hour.

Part of the formaldehyde is then added to the reactor streamwise over a period of 2 to 2½ hours. The reaction is exothermic and controlled by the rate of formaldehyde addition. The reactor temperature is preferably kept between 100 to 120 °C and it should not exceed 135 °C. After all of this part of the formaldehyde is added, the mixture is held at reflux for 15 minutes.

Thereafter, a commercially available resorcinol still residue known as RM-441 is preferably added in 80% solution over ¼ to ½ hour to the reactor while the reaction mixture is maintained at 80° to 100 °C. About 27 grams of this solution would preferably be used for each mole of resorcinol used. This residue is a mixture of resorcinol and 3,4'-dihydroxy diphenyl; 2,4,3'-trihydroxyl diphenyl and higher molecular weight polymeric materials. Analysis of typical samples of such residue shows 2% to 8% resorcinol, 12% to 20% dihydroxy diphenyl and 25% to 35% trihydroxyl diphenyl and the higher molecular weight polymers making up the balance. RM-441 is commercially available from Koppers Company, Inc. located at Pittsburgh, Pennsylvania, U.S.A.

The remainder of the formaldehyde is then added streamwise for an additional time of ½ hour while the reaction mixture is maintained at 95° to 100 °C after all formaldehyde is added and the mixture is held at reflux for 15 minutes. For each mole of resorcinol used, about 0.08 moles of sodium hydroxide are then charged to the reactor. Atmospheric distillation is conducted until a temperature of 145 °C is reached. A vacuum is applied to the kettle. As a vacuum is applied, the temperature will drop and the resin will foam. The rate that vacuum is applied should be controlled so that the temperature does not drop below 125 °C and the resin does not foam into the vapour lines. When foaming has subsided, the vacuum should be applied in increments until full vacuum at least (95% or 952 x $10^2$Pa [715 mm Hg]) is maintained. Pulling vacuum too rapidly may pull resin into the vapour header and condenser, plugging the condenser. When a temperature of 160 °C has been reached, vacuum is released and the kettle emptied, after which the finished resin is transported to a flaker to reduce it to about ⅛ to ¼ inch flakes. It may alternatively be broken into small pieces or ground to about 0.64 cm (¼ inch) pieces.

Referring to Figure 2, the resin of the present invention may alternatively be produced by first charging water and resorcinol to the reactor. An agitator is used, and, as necessary, the addition of resorcinol is stopped briefly to allow for the mixing of water and resorcinol. If the agitator labours or stalls, heat may be put on the reactor, but the temperature of the mixture should not exceed 100 °C. The resorcinol still residue 80% solution is then charged to the reactor and the mixture is heated to 100° to 120 °C.

A 37% formaldehyde solution is then added to the mixture during an additional time of 2 to 2½ hours. The reaction time is exothermic and is controlled by the rate of formaldehyde addition. Reactor temperature should not be allowed to exceed 135 °C.

The formaldehyde is added in two increments, and when all of the first amount of formaldehyde has been added to the reactor, mixing is conducted for 10-15 minutes and a sample is withdrawn for a viscosity check. A high-intensity light may be required to see the bubble. The viscosity should be 30-36 Gardner Holdt seconds at 23 °C. If the results obtained are within this range, an adjustment in the second formaldehyde charge may be necessary.

When all of the second amount of formaldehyde has been charged, the mixture is agitated for 10 minutes, a sample is withdrawn and viscosity checked. This result should be 40 to 85 Gardner Holdt seconds. If viscosity is not within this range, additional formaldehyde or resorcinol is added to obtain an endpoint within the acceptable range. The ideal endpoint would be 63 Gardner Holdt seconds.

Reactor valves are set for atmospheric distillation, and atmospheric distillation is continued until a temperature of 110 °C is reached. When the reactor temperature reaches 110 °C, p-toluene sulphonic acid

is charged. Styrene is then added streamwise over a period of one hour. Distillation is continued during styrene addition and styrene is retained from water styrene azeotrope while removing water. When a temperature of 140 °C has been reached, the temperature is held at 140° to 145 °C for 30 minutes.

The kettle is switched to vacuum distillation. A vacuum is slowly applied to the kettle. As a vacuum is applied, the temperature will drop and the resin will foam. The rate that the vacuum is applied should be controlled so that the temperature does not drop below 125 °C and the resin does not foam into the vapour lines. When foaming has subsided, the vacuum should be applied in increments until full vacuum (at least 95% or 952 x $10^2$ Pa [715 mm Hg]) is maintained. Pulling the vacuum too rapidly may pull resin into the vapour header and condenser, plugging the condenser.

When a temperature of 160 °C has been reached, the vacuum is released and the kettle is emptied. The completed resin is then flaked, broken into small pieces or ground to about 0.64 cm [$\frac{1}{4}$ inch] pieces.

The process of the present invention is further illustrated by the following Examples.

Example 1

440.4 grams of resorcinol was charged to a flask and heated to 125 °C. 0.8 g of p-toluene sulphonic acid was then added and mixed for 10 minutes. 145 g of styrene was then charged to the flask streamwise over a period of about 1 hour, temperature being maintained at 125° to 135 °C for 1 hour after all of the styrene had been added. A 37% formaldehyde solution in the amount of 220 g. was then charged to the reactor streamwise over a period of 30 minutes at a temperature of 100° to 125 °C. After all the formaldehyde was added, the mixture was held at reflux for 15 minutes. 0.2 g. of 50% solution of sodium hydroxide was added and water was then removed by atmospheric distillation to 145 °C and vacuum was applied and distillation continued to 160 °C. When a temperature of 160 °C was reached, the vacuum was released and the flask emptied. The resulting resins had a softening point of 123 °C and a moisture content of 0.2%. Free resorcinol was 3.4 percent. The compound made by the reaction of resorcinol and styrene in the above-described manner was identified by infrared (IR) and proton magnetic resonance (NMR) procedures and found to have the following structure.

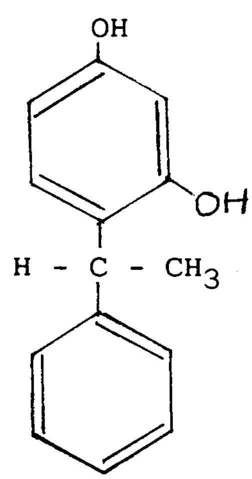

The compound made as a product of the entire above-described procedure was analyzed by infrared (IR) and proton magnetic resonance (NMR) procedures and identified as having the following structure.

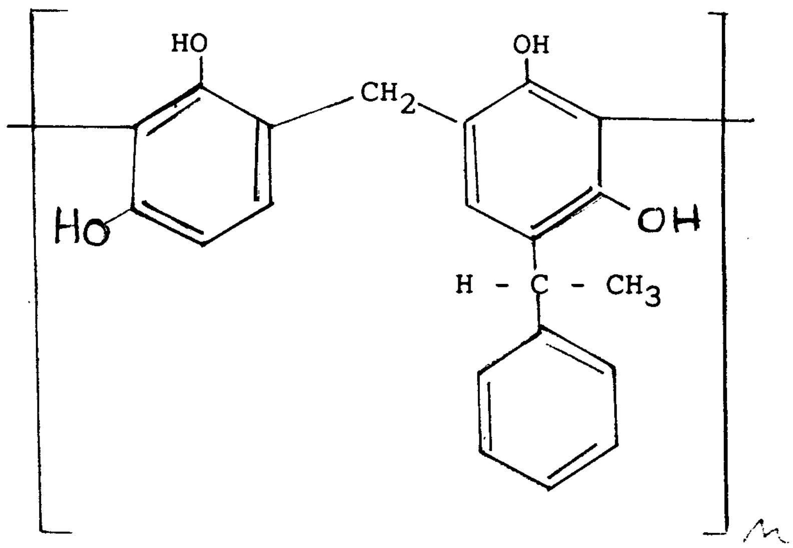

This disclosed resin was compared with a silica/black control nonbonding agent and B-19S, a resorcinol-aldehyde resin rubber curing agent available from Koppers Company, Inc., Pittsburgh, Pennsylvania, U.S.A. Rheometer cur, hardness, tensile strength, adhesion and fuming characteristics were evaluated. The results of this test are shown in Table 1.

Table 1

| Property Test | Control | B-19S Resin | Example 1 Product |
|---|---|---|---|
| Rheometer Cure (ASTM D-2084) | | | |
| * MH (N) [lbs.] | 150.9 [37.3] | 183.3 [41.2] | 167.2 [37.6] |
| * ML (N) [lbs.] | 39.1 [8.8] | 57.8 [13.0] | 57.4 [12.9] |
| $t_f2$ (scorch time) (min.) | 5.0 | 2.8 | 3.5 |
| t 90 (cure time) (min.) | 15.3 | 32.5 | 39.0 |
| Hardness (Shore A) (ASTM D-2240) | 60 | 70 | 65 |
| Tensile (ASTM D-412) | | | |
| 300% Modulus (mPa) [psi] | 10.4 [1509] | 11.6 [1687] | 11.9 [1719] |
| Tensile Strength (mPa) [psi] | 26.3 [3809] | 20.4 [2965] | 21.9 (3178) |
| Ultimate Elongation (%) | 690 | 555 | 565 |
| Adhesion (ASTM D-2229) | | | |
| BW-49 Wire (N (% coverage)) (low copper 63.5% copper, 4.9 g. Kg plating | | | |
| Unaged | 1081 (243 (70)) | 1330 (299 (90)) | 1379 (310 (90)) |
| Steam (24 hrs.) | 1081 (243 (70)) | 1148 (258 (70)) | 1099 (247 (70)) |
| Humidity (14 days) | 992 (223 (10)) | 1059 (238 (70)) | 1179 (265 (70)) |
| BW-65 Wire (N (% coverage)) (high copper 67.5% copper, 5.2 g./Kg) | | | |
| Unaged | 1059 (238 (80)) | 1259 (283 (90)) | 1437 (323 (90)) |
| Steam (24 hrs.) | 729 (164 (40)) | 854 (192 (50)) | 841 (189 (60)) |
| Humidity (14 days) | 694 (156 (40)) | 774 (174 (60)) | 903 (203 (60)) |
| Fuming (at 250°C) | not detected visually | detected visually | not detected visually |

* MH = maximum rheometer torque
* ML = minimum rheometer torque

## Example 2

440 g. of resorcinol was charged to a flask and heated to 120-130°C. 0.7 g. of p-toluene sulphonic acid was then charged and mixed for ten minutes at 120° to 130°C. A 37% formaldehyde in the amount of

220.4 g. solution was charged over a period of 1 hour. When all of the formaldehyde was charged the flask was set for atmospheric distillation, and atmospheric distillation was continued until a temperature of 140 °C was reached. When reactor temperature reached 140 °C, 145.3 g. of styrene was added streamwise over a period of 90 minutes. Temperature was maintained at 135 ° to 140 °C and held at 140 ° to 150 °C for 1 hour after all the styrene had been added. The flask was then switched to vacuum distillation. When a temperature of 160 °C was reached, the vacuum was released and the flask emptied. The resulting resin had a softening point of 122 °C and a moisture content of 0.05%. Free resorcinol was 5.4%. A test similar to the one conduct on the product of the foregoing example was conducted on this product of this example. The results of this test are shown in Table 2.

Table 2

| Property Test | Control | B-19S Resin | Example 1 Product |
|---|---|---|---|
| Rheometer Cure (ASTM D-2084) | | | |
| MH (N) [lbs] | 161.9 [36.3] | 174.8 [39.3] | 161.9 [36.4] |
| ML (N) [lbs] | 38.7 [8.7] | 49.8 [11.2] | 48.9 [11.0] |
| $t_f2$ (scorch time) (min.) | 5.3 | 2.5 | 3.5 |
| $t^{}90$ (cure time) (min.) | 15.5 | 34.5 | 39.0 |
| Hardness (Shore A) (ASTM D-2240) | 60 | 70 | 70 |
| Tensile (ASTM D-412) | | | |
| 300% Modulus (mPa) [psi] | 9.8 [1427] | 11.4 [1651] | 11.6 [1689] |
| Tensile Strength (mPa) [psi] | 25.9 [3759] | 22.0 [3190] | 22.7 [3290] |
| Ultimate Elongation (%) | 700 | 600 | 600 |
| Adhesion (ASTM D-2229) | | | |
| BW-49 Wire (N (% coverage)) (low copper 63% copper, 4.9 g./Kg plating) | | | |
| Unaged | 925 (214 (70)) | 1441 (324 (95)) | 1366 (307 (90)) |
| Steam (24 hrs.) | 983 (221 (90)) | 1054 (237 (60)) | 1045 (235 (65)) |
| Humidity (14 days) | 885 (199 (60)) | 965 (217 (80)) | 845 (190 (75)) |
| BW-64 Wire (N (% coverage)) (high copper 67.5% copper, 4.4 g./Kg) | | | |
| Unaged | 952 (214 (75)) | 1259 (283 (90)) | 1201 (270 (85)) |
| Steam (24 hrs.) | 823 (185 (85)) | 850 (191 (50)) | 885 (199 (55)) |
| Humidity (14 days) | 529 (119 (50)) | 703 (158 (70)) | 734 (165 (165)) |
| Fuming (at 250°C) | not detected visually | detected visually | not detected visually |

## Examples 3-6

The procedure of Example 1 was repeated four times except the amount of styrene used was varied as is shown in Table 3. The percentage of free resorcinol and the softening points of the resulting resins were

measured and are shown in Table 3.

Table 3

| Example | Styrene (g) | Free Resorcinol | Softening Point |
|---|---|---|---|
| 3 | 0.00 | 13.5 | 126.6 |
| 4 | 145.00 | 3.4 | 15.9 |
| 5 | 184.8 | 3.1 | 124.7 |
| 6 | 206.6 | 1.1 | 121.5 |

Examples 7-9

The procedure of Example 1 was repeated three more times except that the 440.4 g. of resorcinol, 0.8 g. p-toluene sulphonic acid, 204 g. of 37% formaldehyde solution and 0.3 g. of sodium hydroxide were used and the amount of styrene was varied as shown in Table 4. The percentage of free resorcinol and the softening points of the resulting resins were measured and are shown in Table 4.

Table 4

| Example | Styrene (g.) | Free Resorcinol (%) | Softening Point (°C) |
|---|---|---|---|
| 7 | 0.00 | 15.5 | 114.8 |
| 8 | 145.00 | 7.9 | 112.6 |
| 9 | 224.00 | 2.5 | 112.0 |

Examples 10-15

The procedure of Example 2 was repeated six times except the amount of styrene used was varied as is shown in Table 5. The percentage of free resorcinol and the softening points of the resulting resins were measured and are shown in Table 5.

Table 5

| Example | Styrene (g.) | Free Resorcinol (%) | Softening Point (°C) |
|---|---|---|---|
| 10 | 0.00 | 13.5 | 126.6 |
| 11 | 60.00 | 9.0 | 127.4 |
| 12 | 79.2 | 7.4 | 124.8 |
| 13 | 110.0 | 5.4 | 122.6 |
| 14 | 145.2 | 2.6 | 118.7 |
| 15 | 149.2 | 1.7 | 117.0 |

Examples 16-18

The procedure of Example 2 was repeated three more times except that 440.9 g. of resorcinol, 0.8 g. of p-toluene sulphonic acid, 204.0 g. of 37% formaldehyde solution and 0.3 g. of 50% sodium hydroxide solution were used, and the amount of styrene used was varied as is shown in Table 6. The percentage of free resorcinol and the softening points of the resulting resins were measured and are shown in Table 6.

Table 6

| Example | Styrene (g.) | Free Resorcinol (%) | Softening Point (°C) |
|---|---|---|---|
| 16 | 0.00 | 15.5 | 114.8 |
| 17 | 88.00 | 9.1 | 112.3 |
| 18 | 158.40 | 3.6 | 109.4 |

Example 19

89.9 kg [198 pounds) of resorcinol was charged to a reactor and heated to 120 to 130°C. 147 grams [0.3 pounds] of p-toluene sulphonic acid was then similarly charged and mixed for 10 minutes at 120° to 130°C. Styrene was then charged to the reactor streamwise. The resulting reaction was exothermic and was controlled by the rate of styrene addition. The addition time was about 1 hour. Temperature was maintained at 125° to 135°C for the reaction and then held at 135 to 145°C for ½ hour after all of the styrene had been added. A 37% formaldehyde solution in the amount of 40.6 kg [89.4 pounds] was then charged to the reactor streamwise. The resulting reaction was exorthermic and was controlled by the rate of formaldehyde addition. The reactor temperature was not allowed to exceed 135°C. Addition time for formaldehyde was about 2 hours. After all the formaldehyde was added, the mixture was held at reflux for 15 minutes. At 80% solution of RM-441 then was charged to the reactor streamwise in an amount of 15 kg [27.5 pounds]. Addition time was about ½ hour. An addition 5.2 kg (11.4 pounds) of 37% formaldehyde solution was then added to the reactor streamwise. Addition time was about ½ hour. After all the formaldehyde had been added, the mixture was held at reflux for ¼. 0.91 kg [2 pounds] of a 50% sodium hydroxide solution was then added and reactor valves were set for atmospheric distillation. Atmospheric distillation was continued until a temperature of 145°C was reached. The kettle was then switched to vacuum distillation. The rate that the vacuum was applied was controlled so that the temperature did not drop below 125°C and the resin did not foam into the vapour lines. When a temperature of 160°C was reached, the vacuum was released and the kettle empties. The resulting resins from several batches had a softening point of 117°-123°C and a moisture content of 0.7%. The pH of a 40% aqueous alcohol solution was 5.0-6.0. Free resorcinol was 2.5%-3.5%.

Example 20

5.3 kg [9.7 pounds] of water was charged to the reactor followed by 84 kg [185.2 pounds] of technical grade resorcinol. After each 22.7 kg [50 pounds], or as needed, the addition was stopped and the agitator run briefly until the resorcinol and water were mixed after which charging was resumed. 11.7 kg [25.7 pounds] of an 80% solution of RM-441 was then charged to the reactor and the mixture was heated to 100° to 120°C. 40.6 kg [89.4 pounds] of a formaldehyde solution was then added to the reactor streamwise. The resulting reaction was exothermic and was controlled by the rate of formaldehyde addition. The reactor temperature was not allowed to exceed 135°C. Addition time for the formaldehyde was between 2 and 2½ hours. When all of the formaldehyde had been added to the reactor, it was mixed for 10 minutes and a sample was withdrawn for a viscosity check. The viscosity was between 30 to 36 Gardner Holdt seconds at 23°C. Another 2.13 kg [4.7 pounds] of 37% formaldehyde solution was then added streamwise. When all of the second amount of formaldehyde was charged, the mixture was agitated for 10 minutes. A sample was withdrawn and viscosity checked. The results were from 45-85 Gardner Holdt seconds. Reactor valves were set for atmospheric distillation and continued until a temperature of 110°C was reached. When reactor temperature reached 110°C, 0.54 kg [1.2 pounds] of p-toluene sulphonic acid were charged. 37.8 kg [83.3 pounds] of styrene were added streamwise over a period of one hour. Distillation was continued during styrene addition and styrene was returned from the water/styrene azeotrope while water was removed. Once a temperature of 140°C was reached, the reaction was held at 140° to 145°C for 30 minutes. The kettle was switched to vacuum distillation. The rate that the vacuum was applied was controlled so that the temperature did not drop below 125°C and the resin did not foam into the vapour lines. When a temperature of 160°C was reached, the vacuum was released and the kettle was emptied. The resulting resin had a softening point of 117 to 128°C and a moisture content of 0.7%. The pH of a 50% aqueous/alcohol solution was from 5.0-6.0. It has 2.5%-3.5% free resorcinol.

It will be appreciated that the above-described resins are low fuming, nonhygroscopic and low in free resorcinol.

## Claims

**Claims for the following Contracting States : AT, BE, CH, DE, FR, GB, GR, IT, LU, NL, SE**

**1.** A process for making a phenolic resin, for use in rubber compounding, which process comprises the steps of reacting a compound having the formula I

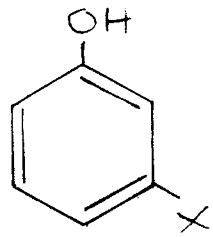

I

in which X is hydroxyl, hydrogen or an alkyl group having from 1 to 4 carbon atoms, with a compound having the formula II

$Y - CH = CH_2$ II

in which Y is phenyl, hydrogen or an aliphatic alkyl group having from 1 to 4 carbon atoms, and with a compound having the formula III

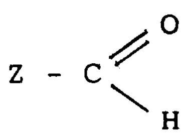

III

in which Z is hydrogen or an alkyl group having from 1 to 4 carbon atoms; and wherein the molar ratio of the compound of formula III to the compound of formula I is 0.5 to 0.8 moles to 1.0 mole.

**2.** A process according to claim 1, wherein the compound of formula I is resorcinol.

**3.** A process according to claim 1 or 2, wherein the compound of formula II is styrene.

**4.** A process according to claim 1, 2 or 3, wherein the compound of formula III is formaldehyde.

**5.** A process according to any one of claims 1 to 4, wherein the molar ratio of the compound of formula I to the compound of formula II is 1 mole to 0.25-1.0 mole.

**6.** A process according to any one of claims 1 to 5, wherein the compound of formula I is resorcinol and the free resorcinol content of the phenolic resin is between 0 and 5 weight percent.

**7.** A process according to any one claims 1 to 6 comprising the steps of:
(a) first reacting the compound of formula I with the compound of formula II; and then
(b) reacting the product of step (a) with a compound of formula III.

**8.** A process according to claim 7, wherein step (a) is carried out at a temperature in the range of from 120° to 140°C.

**9.** A process according to claim 7 or 8, wherein step (a) is carried out in the presence of an acid catalyst.

**10.** A process according to claim 9, wherein the acid catalyst is p-toluene sulphonic acid.

**11.** A process according to any one of claims 7 to 10, wherein step (b) is carried out at a temperature in the range of from 110° to 130°C.

**12.** A process according to any one of claims 7 to 11, wherein resorcinol still residue and sodium hydroxide are introduced in step (b).

**13.** A process according to any one of claims 1 to 6, comprising the steps of:
(a) first reacting the compound of formula I with the compound of formula III; and then
(b) reacting the product of step (a) with the compound of formula II.

**14.** A process according to claim 13, wherein step (a) is carried out at a temperature in the range of from 100° to 120°C.

**15.** A process according to claim 13 or 14, wherein in step (b), before the compound of formula II is added, dehydration at atmospheric pressure takes place from 130° to 150°C, and, after the compound of formula II is added, the reaction is completed at a temperature in the range of from 130° to 150°C.

**16.** A process according to claim 13, 14 or 15, wherein step (b) is carried out in the presence of an acid catalyst.

**17.** A process according to claim 16, wherein the acid catalyst is p-toluene sulphonic acid.

**18.** A process according to any one of claims 13 to 17, wherein resorcinol still residue and water are introduced in step (a) and sodium hydroxide is introduced in step (b).

**19.** A phenolic resin when made by the process of any one of claims 1 to 18.

**20.** A phenolic resin as claimed in claim 19 wherein the compound of formula I is resorcinol, the compound of formula II is styrene and the compound of formula III is formaldehyde, whereby the phenolic resin can be represented by formula IV

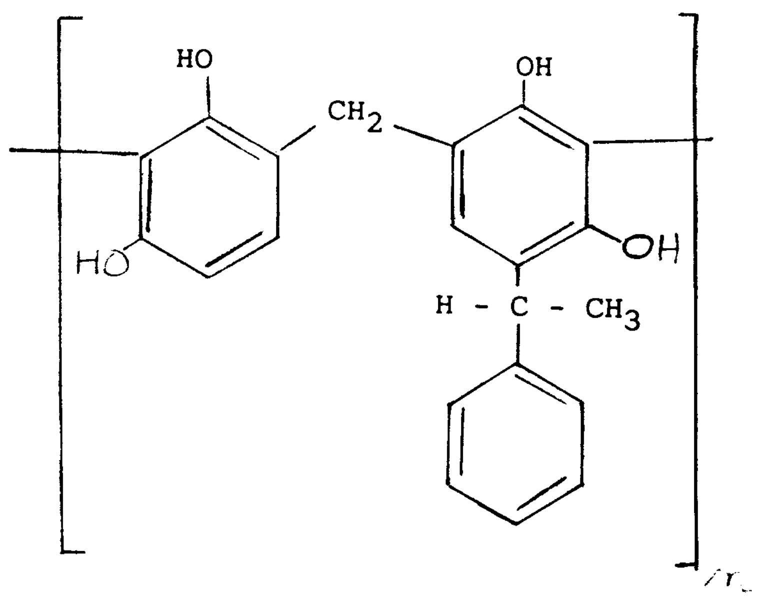

IV

**21.** A phenolic resin as claimed in claim 19 or 20, having a free resorcinol content between 0 and 5 weight percent.

**22.** A phenolic resin according to claim 19, wherein X, in the compound of formula I, is hydrogen or an alkyl group having from 1 to 4 carbon atoms.

**23.** The use in a rubber composition of a phenolic resin as claimed in any one of claims 19 to 22.

**Claims for the following Contracting State : ES**

1. A process for making a phenolic resin, for use in rubber compounding, which process comprises the steps of reacting a compound having the formula I

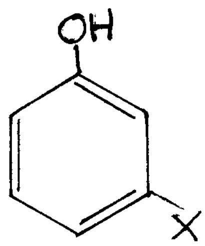

I

in which X is hydroxyl, hydrogen or an alkyl group having from 1 to 4 carbon atoms, with a compound having the formula II

$Y - CH = CH_2$ II

in which Y is phenyl, hydrogen or an aliphatic alkyl group having from 1 to 4 carbon atoms, and with a compound having the formula III

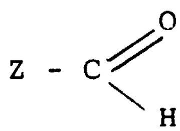

III

in which Z is hydrogen or an alkyl group having from 1 to 4 carbon atoms; and wherein the molar ratio of the compound of formula III to the compound of formula I is 0.5 to 0.8 moles to 1.0 mole.

2. A process according to claim 1, wherein the compound of formula I is resorcinol.

3. A process according to claim 1 or 2, wherein the compound of formula II is styrene.

4. A process according to claim 1, 2 or 3, wherein the compound of formula III is formaldehyde.

5. A process according to any one of claims 1 to 4, wherein the molar ratio of the compound of formula I to the compound of formula II is 1 mole to 0.25-1.0 mole.

6. A process according to any one of claims 1 to 5, wherein the compound of formula I is resorcinol and the free resorcinol content of the phenolic resin is between 0 and 5 weight percent.

7. A process according to any one claims 1 to 6 comprising the steps of:
   (a) first reacting the compound of formula I with the compound of formula II; and then
   (b) reacting the product of step (a) with a compound of formula III.

8. A process according to claim 7, wherein step (a) is carried out at a temperature in the range of from 120° to 140°C.

9. A process according to claim 7 or 8, wherein step (a) is carried out in the presence of an acid catalyst.

10. A process according to claim 9, wherein the acid catalyst is p-toluene sulphonic acid.

11. A process according to any one of claims 7 to 10, wherein step (b) is carried out at a temperature in the range of from 110° to 130°C.

**12.** A process according to any one of claims 7 to 11, wherein resorcinol still residue and sodium hydroxide are introduced in step (b).

**13.** A process according to any one of claims 1 to 6, comprising the steps of:
(a) first reacting the compound of formula I with the compound of formula III; and then
(b) reacting the product of step (a) with the compound of formula II.

**14.** A process according to claim 13, wherein step (a) is carried out at a temperature in the range of from 100° to 120°C.

**15.** A process according to claim 13 or 14, wherein in step (b), before the compound of formula II is added, dehydration at atmospheric pressure takes place from 130° to 150°C, and, after the compound of formula II is added, the reaction is completed at a temperature in the range of from 130° to 150°C.

**16.** A process according to claim 13, 14 or 15, wherein step (b) is carried out in the presence of an acid catalyst.

**17.** A process according to claim 16, wherein the acid catalyst is p-toluene sulphonic acid.

**18.** A process according to any one of claims 13 to 17, wherein resorcinol still residue and water are introduced in step (a) and sodium hydroxide is introduced in step (b).

**19.** The use in a rubber composition of a phenolic resin as prepared by the process according to any one of claims 1 to 18, with a curing agent therefor.

**Patentansprüche**
**Patentansprüche für folgende Vertragsstaaten : AT, BE, CH, DE, FR, GB, GR, IT, LU, NL, SE**

**1.** Verfahren zur Herstellung von Phenolharz zum Vermischen mit Kautschuk, wobei das Verfahren die Schritte umfaßt: Reaktion einer Verbindung der Formel I

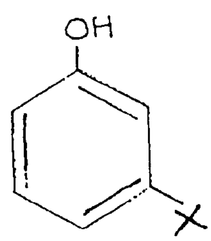

I

worin X eine Hydroxylgruppe, Wasserstoff oder eine Alkylgruppe mit 1 bis 4 Kohlenstoffatomen ist, mit einer Verbindung mit der Formel II

$Y - CH = CH_2$ II

worin Y eine Phenylgruppe, Wasserstoff oder eine aliphatische Alkylgruppe mit 1 bis 4 Kohlenstoffatomen ist,
und mit einer Verbindung der Formel III

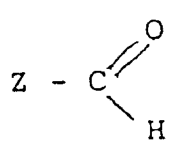

III

worin Z Wasserstoff oder eine Alkylgruppe mit 1 bis 4 Kohlenstoffatomen ist; und
wobei das Molverhältnis der Verbindung der Formel III zur Verbindung der Formel I im Bereich von 0,5

bis 0,8 Mol zu 1,0 Mol liegt.

2. Verfahren nach Anspruch 1, wobei die Verbindung der Formel I Resorcin ist.

3. Verfahren nach Anspruch 1 oder 2, wobei die Verbindung der Formel II Styrol ist.

4. Verfahren nach Anspruch 1, 2 oder 3, wobei die Verbindung der Formel III Formaldehyd ist.

5. Verfahren nach einem der Ansprüche 1 bis 4, wobei das Molverhältnis der Verbindung der Formel I zur Verbindung der Formel II 1 Mol zu 0,25 bis 1,0 Mol beträgt.

6. Verfahren nach einem der Ansprüche 1 bis 5, wobei die Verbindung der Formel I Resorcin ist und der Gehalt des Phenolharzes an freiem Resorcin 0 bis 5 Gew.% beträgt.

7. Verfahren nach einem der Ansprüche 1 bis 6, welches die Schritte umfaßt:
(a) zuerst Umsetzen der Verbindung der Formel I mit der Verbindung der Formel II, und danach
(b) Umsetzen des Produktes vom Schritt (a) mit einer Verbindung der Formel III.

8. Verfahren nach Anspruch 7, wobei der Schritt (a) bei einer Temperatur im Bereich von 120 bis 140 °C erfolgt.

9. Verfahren nach Anspruch 7 oder 8, wobei der Schritt (a) in Gegenwart eines sauren Katalysators erfolgt.

10. Verfahren nach Anspruch 9, wobei der saure Katalysator p-Toluolsulfonsäure ist.

11. Verfahren nach einem der Ansprüche 7 bis 10, wobei der Schritt (b) bei einer Temperatur im Bereich von 110 bis 130 °C erfolgt.

12. Verfahren nach einem der Ansprüche 7 bis 11, wobei im Schritt (b) ein Resorcindestillationsrückstand und Natriumhydroxid eingeführt werden.

13. Verfahren nach einem der Ansprüche 1 bis 6, welches die Schritte umfaßt:
(a) zuerst Umsetzen der Verbindung der Formel I mit der Verbindung der Formel III, und danach
(b) Umsetzen des Produktes vom Schritt (a) mit der Verbindung der Formel II:

14. Verfahren nach Anspruch 13, wobei der Schritt (a) bei einer Temperatur im Bereich von 100 bis 120 °C erfolgt.

15. Verfahren nach Anspruch 13 oder 14, wobei im Schritt (b) vor dem Zusetzen der Verbindung der Formel II eine Dehydratation bei Atmosphärendruck von 130 bis 150 °C erfolgt, und nach dem Zusetzen der Verbindung der Formel II die Reaktion bei einer Temperatur im Bereich von 130 bis 150 °C abgeschlossen wird.

16. Verfahren nach Anspruch 13, 14 oder 15, wobei der Schritt (b) in Gegenwart eines sauren Katalysators erfolgt.

17. Verfahren nach Anspruch 16, wobei der saure Katalysator p-Toluolsulfonsäure ist.

18. Verfahren nach einem der Ansprüche 13 bis 17, wobei im Schritt (a) ein Resorcindestillationsrückstand und Wasser eingeführt werden und im Schritt (b) Natriumhydroxid eingeführt wird.

19. Phenolharz, nach dem Verfahren nach einem der Ansprüche 1 bis 18 hergestellt.

20. Phenolharz nach Anspruch 19, wobei die Verbindung der Formel 1 Resorcin ist, die Verbindung der Formel II Styrol ist und die Verbindung der Formel III Formaldehyd ist, wodurch das Phenolharz durch die Formel IV dargestellt werden kann:

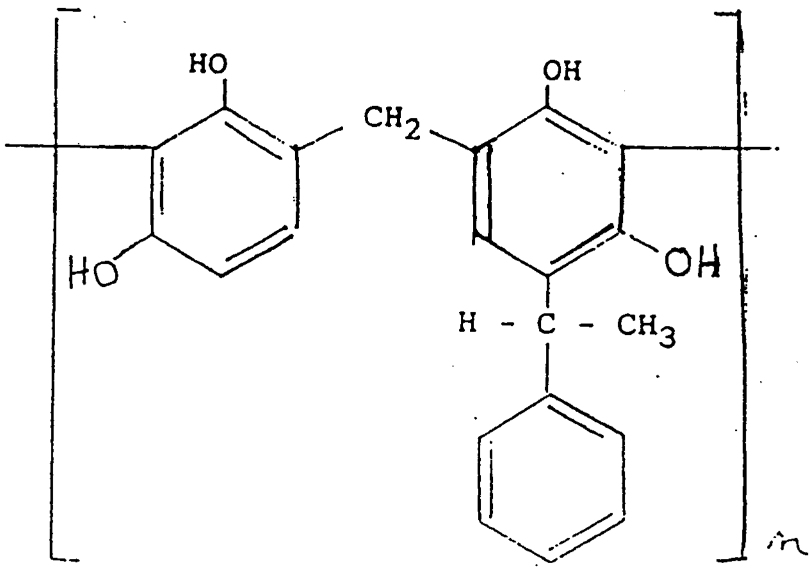

IV

21. Phenolharz nach Anspruch 19 oder 20 mit einem Gehalt an freiem Resorcin von 0 bis 5 Gew.%.

22. Phenolharz nach Anspruch 19, wobei X in der Verbindung der Formel I Wasserstoff oder eine Alkylgruppe mit 1 bis 4 Kohlenstoffatomen ist.

23. Verwendung eines Phenolharzes nach einem der Ansprüche 19 bis 22 in einer Kautschukzusammensetzung.

**Patentansprüche für folgenden Vertragsstaat : ES**

1. Verfahren zur Herstellung von Phenolharz zum Vermischen mit Kautschuk, wobei das Verfahren die Schritte umfaßt: Reaktion einer Verbindung der Formel I

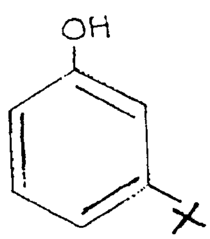

I

worin X eine Hydroxylgruppe, Wasserstoff oder eine Alkylgruppe mit 1 bis 4 Kohlenstoffatomen ist, mit einer Verbindung mit der Formel II

$Y - CH = CH_2$ II

worin Y eine Phenylgruppe, Wasserstoff oder eine aliphatische Alkylgruppe mit 1 bis 4 Kohlenstoffatomen ist,
und mit einer Verbindung der Formel III

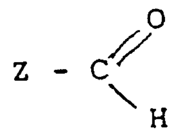

III

worin Z Wasserstoff oder eine Alkylgruppe mit 1 bis 4 Kohlenstoffatomen ist; und
wobei das Molverhältnis der Verbindung der Formel III zur Verbindung der Formel I im Bereich von 0,5 bis 0,8 Mol zu 1,0 Mol liegt.

**2.** Verfahren nach Anspruch 1, wobei die Verbindung der Formel I Resorcin ist.

**3.** Verfahren nach Anspruch 1 oder 2, wobei die Verbindung der Formel II Styrol ist.

**4.** Verfahren nach Anspruch 1, 2 oder 3, wobei die Verbindung der Formel III Formaldehyd ist.

**5.** Verfahren nach einem der Ansprüche 1 bis 4, wobei das Molverhältnis der Verbindung der Formel I zur Verbindung der Formel II 1 Mol zu 0,25 bis 1,0 Mol beträgt.

**6.** Verfahren nach einem der Ansprüche 1 bis 5, wobei die Verbindung der Formel I Resorcin ist und der Gehalt des Phenolharzes an freiem Resorcin 0 bis 5 Gew.% beträgt.

**7.** Verfahren nach einem der Ansprüche 1 bis 6, welches die Schritte umfaßt:
(a) zuerst Umsetzen der Verbindung der Formel I mit der Verbindung der Formel II, und danach
(b) Umsetzen des Produktes vom Schritt (a) mit einer Verbindung der Formel III.

**8.** Verfahren nach Anspruch 7, wobei der Schritt (a) bei einer Temperatur im Bereich von 120 bis 140 °C erfolgt.

**9.** Verfahren nach Anspruch 7 oder 8, wobei der Schritt (a) in Gegenwart eines sauren Katalysators erfolgt.

**10.** Verfahren nach Anspruch 9, wobei der saure Katalysator p-Toluolsulfonsäure ist.

**11.** Verfahren nach einem der Ansprüche 7 bis 10, wobei der Schritt (b) bei einer Temperatur im Bereich von 110 bis 130 °C erfolgt.

**12.** Verfahren nach einem der Ansprüche 7 bis 11, wobei im Schritt (b) ein Resorcindestillationsrückstand und Natriumhydroxid eingeführt werden.

**13.** Verfahren nach einem der Ansprüche 1 bis 6, welches die Schritte umfaßt:
(a) zuerst Umsetzen der Verbindung der Formel I mit der Verbindung der Formel III, und danach
(b) Umsetzen des Produktes vom Schritt (a) mit der Verbindung der Formel II:

**14.** Verfahren nach Anspruch 13, wobei der Schritt (a) bei einer Temperatur im Bereich von 100 bis 120 °C erfolgt.

**15.** Verfahren nach Anspruch 13 oder 14, wobei im Schritt (b) vor dem Zusetzen der Verbindung der Formel II eine Dehydratation bei Atmosphärendruck von 130 bis 150 °C erfolgt, und nach dem Zusetzen der Verbindung der Formel II die Reaktion bei einer Temperatur im Bereich von 130 bis 150 °C abgeschlossen wird.

**16.** Verfahren nach Anspruch 13, 14 oder 15, wobei der Schritt (b) in Gegenwart eines sauren Katalysators erfolgt.

**17.** Verfahren nach Anspruch 16, wobei der saure Katalysator p-Toluolsulfonsäure ist.

**18.** Verfahren nach einem der Ansprüche 13 bis 17, wobei im Schritt (a) ein Resorcindestillationsrückstand und Wasser eingeführt werden und im Schritt (b) Natriumhydroxid eingeführt wird.

19. Verwendung eines nach dem Verfahren nach einem der Ansprüche 1 bis 18 hergestellten Phenolharzes zusammen mit einem Vulkanisiermittel in einer Kautschukzusammensetzung.

**Revendications**

**Revendications pour les Etats contractants suivants : AT, BE, CH, DE, FR, GB, GR, IT, LU, NL, SE**

1. Procédé pour la fabrication d'une résine phénolique destinée à être utilisée dans une composition de caoutchouc, lequel procédé consiste à faire réagir un composé répondant à la formule I

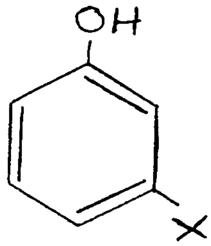

I

dans laquelle X est un groupe hydroxyle, un atome d'hydrogène ou un groupe alkyle ayant de 1 à 4 atomes de carbone, avec un composé répondant à la formule II

$Y\text{-}CH=CH_2$ II

dans laquelle Y est un groupe phényle, un atome d'hydrogène ou un groupe alkyle aliphatique ayant de 1 à 4 atomes de carbone, et avec un composé répondant à la formule III

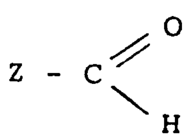

III

dans laquelle Z est un atome d'hydrogène ou un groupe alkyle ayant de 1 à 4 atomes de carbone; et dans lequel le rapport molaire du composé de formule III au composé de formule I est compris entre 0,5:1,0 et 0,8:1,0.

2. Procédé conforme à la revendication 1, dans lequel le composé répondant à la formule I est le résorcinol.

3. Procédé conforme à la revendication 1 ou 2, dans lequel le composé répondant à la formule II est le styrène.

4. Procédé conforme à la revendication 1, 2 ou 3, dans lequel le composé répondant à la formule III est le formaldéhyde.

5. Procédé conforme à une quelconque des revendications 1 à 4, dans lequel le rapport molaire du composé de formule I au composé de formule II est compris entre 1,0:0,25 et 1,0:1,0.

6. Procédé conforme à une quelconque des revendications 1 à 5, dans lequel le composé de formule I est le résorcinol et la teneur en résorcinol libre dans la résine phénolique est comprise entre 0 et 5% en poids.

7. Procédé conforme à une quelconque des revendications 1 à 6, qui consiste en les étapes suivantes :
(a) faire d'abord réagir le composé de formule I avec le composé de formule II; et puis
(b) faire réagir le produit issu de l'étape (a) avec le composé de formule III.

**8.** Procédé conforme à la revendication 7, dans lequel l'étape (a) est effectuée à une température comprise entre 120 °C et 140 °C.

**9.** Procédé conforme à la revendication 7ou 8, dans lequel l'étape (a) est effectuée en présence d'un catalyseur acide.

**10.** Procédé conforme à la revendication 9, dans lequel le catalyseur acide est l'acide p-toluène-sulfonique.

**11.** Procédé conforme à une quelconque des revendications 7 à 10, dans lequel l'étape (b) est effectuée à une température comprise entre 110 °C et 130 °C.

**12.** Procédé conforme à une quelconque des revendications 7 à 11, dans lequel on introduit au cours de l'étape (b) des résidus de distillation du résorcinol et de l'hydroxyde de sodium.

**13.** Procédé conforme à une quelconque des revendications 1 à 6, qui consiste en les étapes suivantes :
(a) faire d'abord réagir le composé de formule I avec le composé de formule III; et puis
(b) faire réagir le produit issu de l'étape (a) avec le composé de formule II.

**14.** Procédé conforme à la revendication 13, dans lequel l'étape (a) est effectuée à une température comprise entre 100 °C et 120 °C.

**15.** Procédé conforme à la revendication 13 ou 14, dans lequel au cours de l'étape (b), avant que le composé de formule II ne soit ajouté, il s'effectue une déshydratation à pression atmosphérique et à une température comprise entre 130 °C et 150 °C, et après l'addition du composé de formule II, la réaction est achevée à une température comprise entre 130 °C et 150 °C.

**16.** Procédé conforme à la revendication 13, 14 ou 15, dans lequel l'étape (b) est effectuée en présence d'un catalyseur acide.

**17.** Procédé conforme à la revendication 16, dans lequel le catalyseur acide est l'acide p-toluène-sulfonique.

**18.** Procédé conforme à une quelconque des revendications 13 à 17, dans lequel on introduit au cours de l'étape (a) de l'eau et des résidus de distillation du résorcinol et dans lequel on introduit au cours de l'étape (b) de l'hydroxyde de sodium.

**19.** Résine phénolique fabriquée à partir du procédé conforme à une quelconque des revendications 1 à 18.

**20.** Résine phénolique conforme à la revendication 19, pour laquelle le composé de formule I est le résorcinol, le composé de formule II est le styrène et le composé de formule III est le formaldéhyde, laquelle résine phénolique peut être représentée par la formule IV

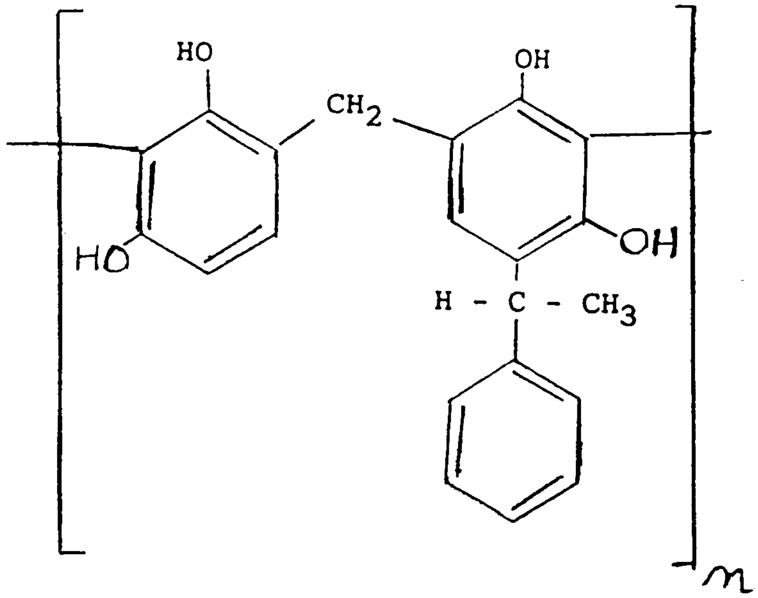

IV

**21.** Résine phénolique conforme à la revendication 19 ou 20, dont la teneur en résorcinol libre est comprise entre 0 et 5% en poids.

**22.** Résine phénolique conforme à la revendication 19, dans laquelle X, dans le composé de formule I, représente un atome d'hydrogène ou un groupe alkyle ayant de 1 à 4 atomes de carbone.

**23.** Utilisation dans une composition de caoutchouc, d'une résine phénolique conforme à une quelconque des revendications 19 à 22.

**Revendications pour l'Etat contractant suivant : ES**

**1.** Procédé pour la fabrication d'une résine phénolique destinée à être utilisée dans une composition de caoutchouc, lequel procédé consiste à faire réagir un composé répondant à la formule I

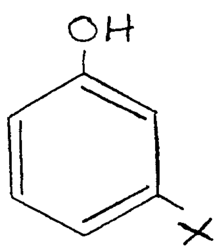

I

dans laquelle X est un groupe hydroxyle, un atome d'hydrogène ou un groupe alkyle ayant de 1 à 4 atomes de carbone, avec un composé répondant à la formule II

$Y\text{-}CH=CH_2$ II

dans laquelle Y est un groupe phényle, un atome d'hydrogène ou un groupe alkyle aliphatique ayant de 1 à 4 atomes de carbone, et avec un composé répondant à la formule III

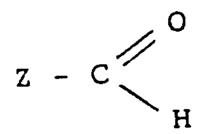

III

dans laquelle Z est un atome d'hydrogène ou un groupe alkyle ayant de 1 à 4 atomes de carbone; et dans lequel le rapport molaire du composé de formule III au composé de formule I est compris entre 0,5:1,0 et 0,8:1,0.

**2.** Procédé conforme à la revendication 1, dans lequel le composé répondant à la formule I est le résorcinol.

**3.** Procédé conforme à la revendication 1 ou 2, dans lequel le composé répondant à la formule II est le styrène.

**4.** Procédé conforme à la revendication 1, 2 ou 3, dans lequel le composé répondant à la formule III est le formaldéhyde.

**5.** Procédé conforme à une quelconque des revendications 1 à 4, dans lequel le rapport molaire du composé de formule I au composé de formule II est compris entre 1,0:0,25 et 1,0:1,0.

**6.** Procédé conforme à une quelconque des revendications 1 à 5, dans lequel le composé de formule I est le résorcinol et la teneur en résorcinol libre dans la résine phénolique est comprise entre 0 et 5% en poids.

**7.** Procédé conforme à une quelconque des revendications 1 à 6, qui consiste en les étapes suivantes :
(a) faire d'abord réagir le composé de formule I avec le composé de formule II; et puis
(b) faire réagir le produit issu de l'étape (a) avec le composé de formule III.

**8.** Procédé conforme à la revendication 7, dans lequel l'étape (a) est effectuée à une température comprise entre 120 ° C et 140 ° C.

**9.** Procédé conforme à la revendication 7 ou 8, dans lequel l'étape (a) est effectuée en présence d'un catalyseur acide.

**10.** Procédé conforme à la revendication 9, dans lequel le catalyseur acide est l'acide p-toluène-sulfonique.

**11.** Procédé conforme à une quelconque des revendications 7 à 10, dans lequel l'étape (b) est effectuée à une température comprise entre 110 ° C et 130 ° C.

**12.** Procédé conforme à une quelconque des revendications 7 à 11, dans lequel on introduit au cours de l'étape (b) des résidus de distillation du résorcinol et de l'hydroxyde de sodium.

**13.** Procédé conforme à une quelconque des revendications 1 à 6, qui consiste en les étapes suivantes :
(a) faire d'abord réagir le composé de formule I avec le composé de formule III; et puis
(b) faire réagir le produit issu de l'étape (a) avec le composé de formule II.

**14.** Procédé conforme à la revendication 13, dans lequel l'étape (a) est effectuée à une température comprise entre 100 ° C et 120 ° C.

**15.** Procédé conforme à la revendication 13 ou 14, dans lequel au cours de l'étape (b), avant que le composé de formule II ne soit ajouté, il s'effectue une déshydratation à pression atmosphérique et à une température comprise entre 130 ° C et 150 ° C, et après l'addition du composé de formule II, la réaction est achevée à une température comprise entre 130 ° C et 150 ° C.

**16.** Procédé conforme à la revendication 13, 14 ou 15, dans lequel l'étape (b) est effectuée en présence d'un catalyseur acide.

**17.** Procédé conforme à la revendication 16, dans lequel le catalyseur acide est l'acide p-toluène-sulfonique.

**18.** Procédé conforme à une quelconque des revendications 13 à 17, dans lequel on introduit au cours de l'étape (a) de l'eau et des résidus de distillation du résorcinol et dans lequel on introduit au cours de l'étape (b) de l'hydroxyde de sodium.

**19.** Utilisation dans une composition de caoutchouc, d'une résine phénolique préparée à l'aide d'un procédé conforme à une quelconque des revendications 1 à 18, en présence d'un agent durcisseur.

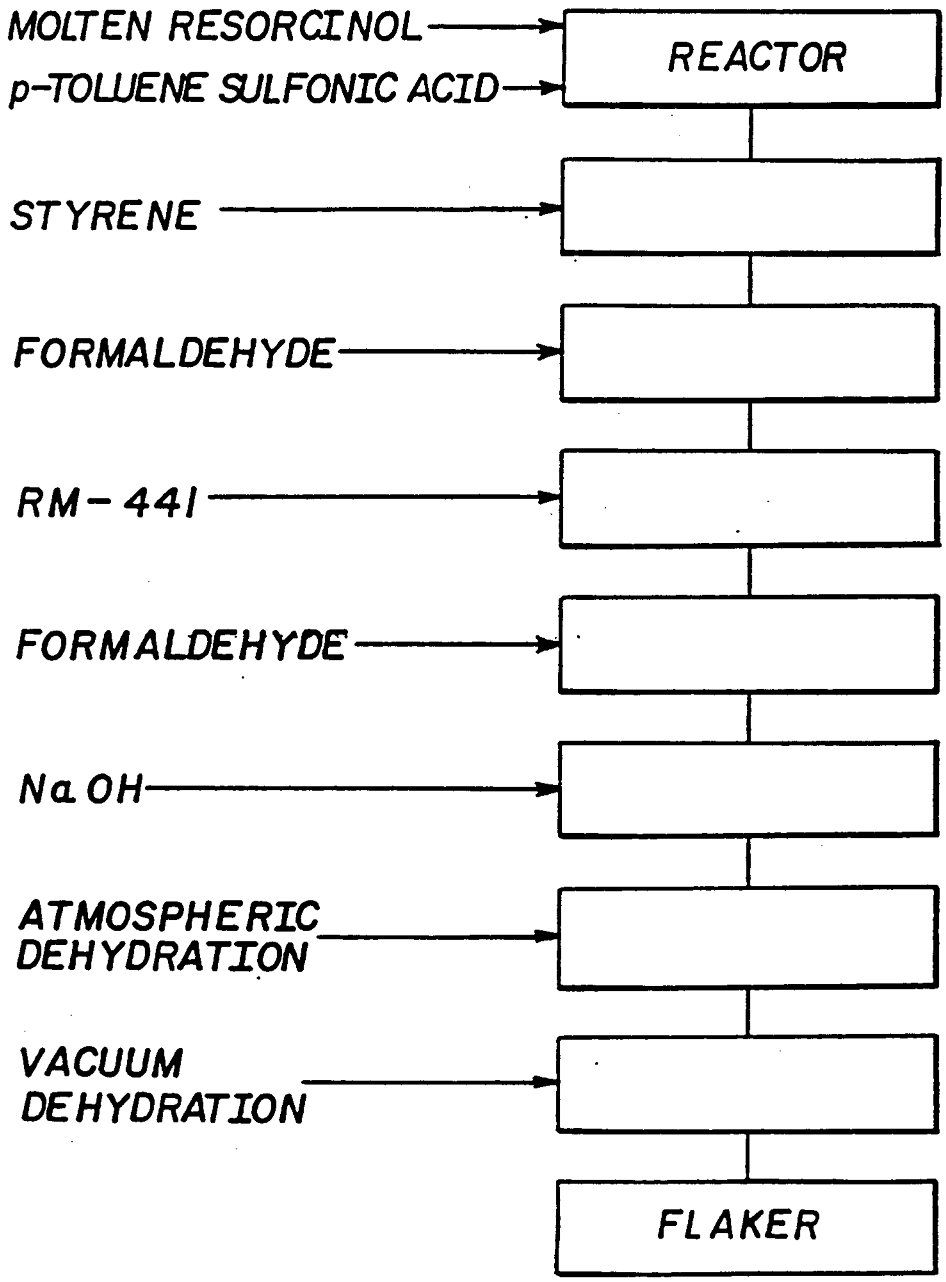
MOLTEN RESORCINOL
p-TOLUENE SULFONIC ACID
REACTOR
STYRENE
FORMALDEHYDE
RM-441
FORMALDEHYDE
NaOH
ATMOSPHERIC DEHYDRATION
VACUUM DEHYDRATION
FLAKER

FIG. 1

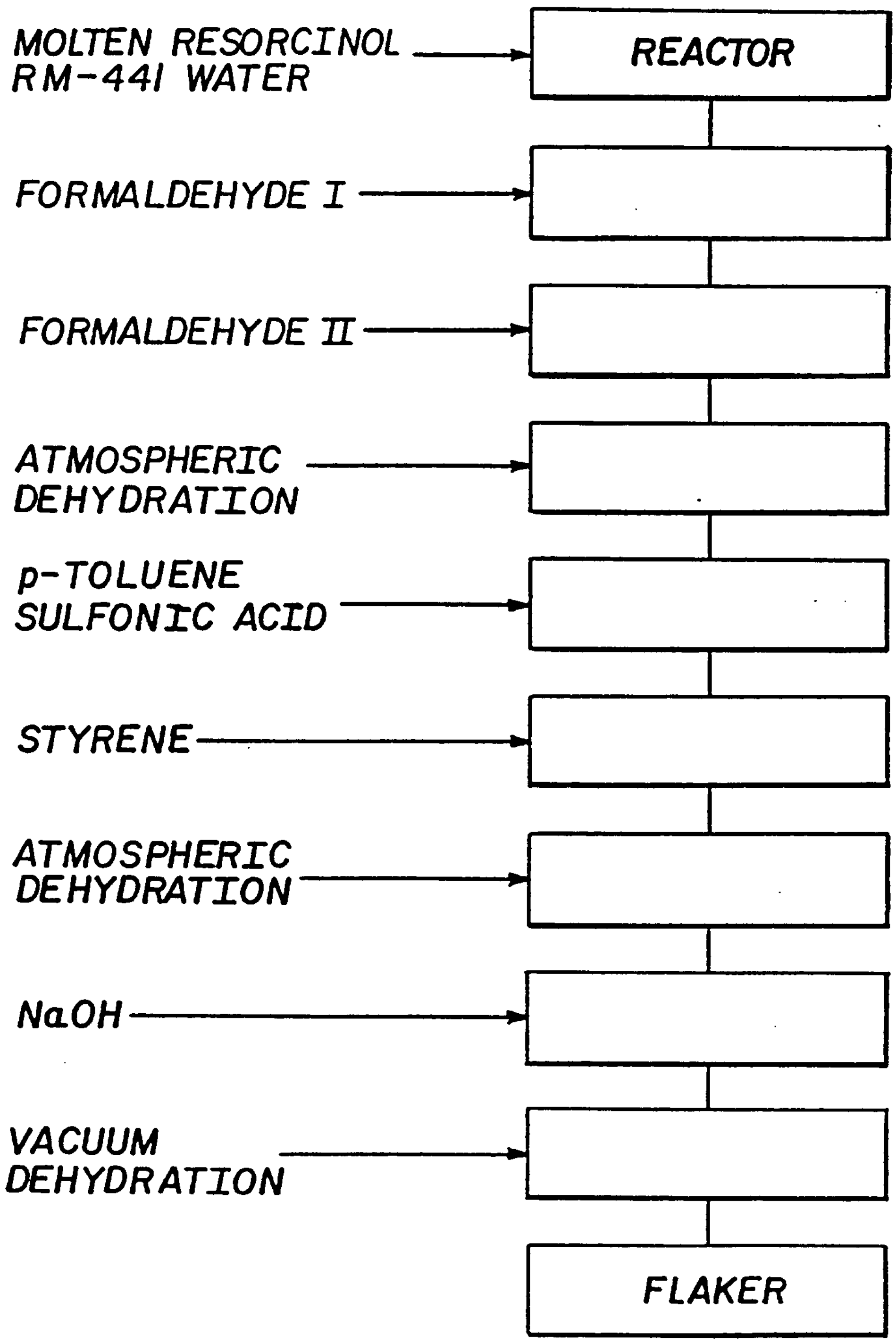
MOLTEN RESORCINOL
RM-441 WATER
REACTOR
FORMALDEHYDE I
FORMALDEHYDE II
ATMOSPHERIC
DEHYDRATION
p-TOLUENE
SULFONIC ACID
STYRENE
ATMOSPHERIC
DEHYDRATION
NaOH
VACUUM
DEHYDRATION
FLAKER

FIG. 2